# FASCICULE DE BREVET EUROPEEN

(11) **EP 1 377 529 B1**
(45) Date de publication et mention de la délivrance du brevet: **13.12.2006**
(21) Numéro de dépôt: 02722243.9
(22) Date de dépôt: 15.03.2002
(51) Int. Cl.: C03B 29/08

(54) **PROCEDE ET DISPOSITIF DE CHAUFFAGE DE FEUILLES DE VERRE DANS UN FOUR**
VERFAHREN UND VORRICHTUNG ZUR ERHITZUNG VON GLASSCHEIBEN IN EINEM OFEN
METHOD AND DEVICE FOR HEATING GLASS SHEETS IN AN OVEN

(30) Priorité: 23.03.2001 BE 200100193; 26.09.2001 BE 200100621
(43) Date de publication de la demande: 07.01.2004
(73) Titulaire: GLAVERBEL, B-1170 Bruxelles (BE)
(72) Inventeur: LAMBERT, Emmanuel, B-6040 Jumet (BE)
(74) Mandataire: Farmer, Guy Dominic
(86) Numéro de dépôt international: PCT/EP2002/003020
(87) Numéro de publication internationale: WO 2002/076897

(56) Documents cités:
- EP-A- 0 030 340
- EP-A- 0 581 742
- EP-A- 0 897 896
- WO-A-97/44283
- WO-A-98/01398
- DE-A- 19 602 184
- US-A- 4 515 622

## Description

La présente invention concerne un procédé de chauffage de feuilles de verre dans un four, notamment en vue d'un traitement thermique ultérieur de ces dernières, en particulier de trempe.

L'invention se rapporte également à un dispositif de mise en oeuvre dudit procédé.

Des fours de chauffage de feuilles de verre en vue en particulier de leur trempe ultérieure comprennent un convoyeur à rouleaux, généralement revêtus de céramique, au-dessus et en dessous duquel sont disposées des résistances électriques destinées à chauffer par radiation des feuilles de verre transportées sur ledit convoyeur. L'ensemble est placé dans une enceinte isolante. Lors du chauffage des résistances, les rouleaux du convoyeur accumulent de la chaleur et la restituent rapidement au verre avec lequel ils entrent en contact, par conduction. A puissance de chauffage égale des résistances inférieures et supérieures, la face inférieure d'une feuille de verre reçoit dès lors une plus grande quantité de chaleur par unité de temps que la face supérieure. Ceci peut entraîner un fléchissement concave d'une telle feuille de verre relativement au plan du convoyeur, lequel conduit éventuellement à une détérioration de sa planéité ainsi qu'à des défauts de surface dus à une concentration du poids de la feuille de verre sur une portion réduite de la surface des rouleaux. Un chauffage non uniforme des feuilles de verre peut également provoquer des distorsions optiques du verre ainsi qu'affecter l'homogénéité de leur fragmentation une fois trempées, lorsqu'elles sont brisées.

Ce phénomène est encore accentué lorsque les feuilles de verre chauffées dans le four sont revêtues de couches à basse émissivité (low-e) qui de ce fait ont la propriété de réfléchir une partie importante de la chaleur radiée par les résistances. La face revêtue de ces feuilles est généralement celle qui n'entre pas en contact avec les rouleaux du convoyeur afin que ceux-ci n'occasionnent pas de détériorations du revêtement de ces feuilles par contact mécanique. Dès lors, non seulement les rouleaux du convoyeur apportent à la face inférieure de la feuille de verre une quantité de chaleur additionnelle à celle radiée par les résistances inférieures du four, mais une partie substantielle de la chaleur radiée par les résistance supérieures ne chauffe pas la face supérieure des feuilles. Un déséquilibre thermique important résulte de la combinaison de ces deux phénomènes, aboutissant à un fléchissement concave correspondant des feuilles de verre et aux inconvénients consécutifs. Des modifications locales des propriétés optiques des couches du revêtement porté par une feuille de verre peuvent s'en suivre, voire des brûlures de ce revêtement. Ces détériorations seront encore accentuées si l'on cherche à rétablir la planéité d'une feuille de verre en augmentant la quantité de chaleur radiée par les résistances disposées au-dessus du convoyeur.

Il a été proposé de pallier les inconvénients susmentionnés en équilibrant le profil de température des feuilles de verre convoyées dans le four.

En particulier, l'on peut prévoir à cette fin dans le four de chauffage, notamment selon les enseignements du brevet US 4390359 A, un dispositif d'injection de gaz chaud au-dessus de la face supérieure des feuilles de verre convoyées dans ledit four. Un transfert de chaleur par convection forcée s'opère entre les jets de gaz et la face supérieure des feuilles, un tel transfert étant indépendant de l'émissivité de la surface sur laquelle la chaleur est appliquée. Il est nécessaire dans ce cas d'interrompre l'injection de gaz en cours de cycle de chauffage, lorsque la température du verre a augmenté suffisamment, faute de quoi un fléchissement convexe des feuilles peut se produire.

Le contrôle du moment précis où il est nécessaire de limiter l'apport de chaleur par convection forcée à la face supérieure des feuilles de verre est délicat et dépend de plusieurs facteurs comme le débit et la température des jets de gaz, le nombre et la composition des rouleaux du convoyeur, la quantité de feuilles de verre convoyées dans le four par unité de temps, laquelle influence la température des rouleaux. Ceci a pour conséquence de rendre nécessaire un système de régulation complexe des injecteurs de gaz qui doit donc être prévu pour assurer le contrôle en question.

Au lieu d'augmenter par convection forcée la quantité de chaleur fournie à la face supérieure de feuilles de verre, il a également été proposé par la demande de brevet WO 97/44283 A1 de diminuer l'apport de chaleur à la face inférieure des feuilles de verre, par un dispositif d'injection de gaz froid sous le convoyeur, en direction de la face inférieure des feuilles de verre.

Un tel dispositif pose également le problème du contrôle de l'apport de gaz froid sous une feuille de verre au fur et à mesure de sa progression dans le four, et demande dès lors également qu'un système de régulation complexe des injecteurs de gaz soit prévu pour assurer ledit contrôle. Par ailleurs, le refroidissement de l'atmosphère du four est défavorable au rendement de chauffage du verre et donc à la quantité de feuilles de verre que le four peut traiter par unité de temps.

Il a également été proposé par le brevet EP 058529 A de disposer sous le convoyeur un dispositif d'injection de gaz chaud perpendiculairement aux feuilles de verre, lequel dispositif est enclenché lorsque la quantité de chaleur rayonnée par les résistances inférieures au convoyeur et réfléchie par celui-ci de sorte qu'elle n'atteint pas la face inférieure des feuilles de verre, devient supérieure à celle transmise par les rouleaux à cette face par conduction, faisant que le bilan thermique du transfert de chaleur aux faces des feuilles devient défavorable à leur face inférieure. Le dispositif selon EP 058529 A est enclenché en vue de rétablir la planéité des feuilles de verre. Néanmoins, un tel dispositif implique, du fait que la direction des jets de gaz est perpendiculaire à la face inférieure des feuilles de verre, que le taux de convection forcée appliqué à cette face demeure sensiblement constant, quelle que soit la planéité desdites feuilles. Dès lors, lorsque l'apport de chaleur aux feuilles au niveau de leur face supérieure, opposée au convoyeur est excessif de sorte qu'il entraîne un fléchissement convexe de ces dernières, l'excès en question n'est pas compensé par une augmentation correspondante du taux de convection forcée appliqué à la face inférieure des feuilles. Ce déséquilibre thermique est encore renforcé par le fait que lorsqu'une feuille de verre s'infléchit de manière convexe au-dessus du convoyeur, les rouleaux de ce dernier n'apportent plus de chaleur par conduction à la face inférieure de la feuille puisque le contact entre elle et lesdits rouleaux est rompu sur la majeure partie de la face considérée.

Enfin, la demande de brevet WO 98/01398 A1 propose un four dans lequel les éléments chauffants radiants sont combinés avec des éléments de chauffe par convection forcée d'air situés au-dessus et au-dessous des rouleaux, et donc des feuilles de verre. Là aussi, comme dans EP 058529 A, la direction des jets d'air est perpendiculaire au sens de déplacement de la feuille de verre sur le convoyeur avec les inconvénients décrits plus haut WO 98/01398 A1 requiert en outre un contrôle de la température par ajustement du taux de circulation de l'air sortant des éléments de chauffe par convection (débit d'air, vitesse des ventilateurs fournissant le flux d'air,...), un contrôle qui n'est pas sans difficulté à exercer.

La présente invention vise à résoudre les problèmes de contrôle de stabilité de la planéité de feuilles de verre dans un four de chauffage desdites feuilles, notamment en vue d'un traitement thermique ultérieur de ces dernières, en proposant un procédé de chauffage de feuilles de verres dans un four dans lequel procédé les feuilles de verre sont transportées par un convoyeur à rouleaux horizontaux au travers du four, où les faces d'une feuille de verre sont chauffées par des moyens de chauffage par radiation, par exemple des résistances électriques ou équivalents, disposés au dessus et en dessous de ladite feuille et dans lequel, en vue en particulier d'équilibrer l'effet thermique total appliqué aux faces supérieure et inférieure d'une feuille de verre, lesdites faces sont soumises à un effet de convection forcée de chaleur par injection de gaz chaud dans le four au dessus et en dessous d'une feuille de verre, le gaz étant injecté en dessous d'une feuille de verre sous forme de jets dont l'axe de symétrie est oblique relativement au sens de déplacement d'une feuille de verre sur le convoyeur et dirigés vers la face inférieure de ladite feuille et dans lequel l'axe de symétrie desdits jets coupe le plan de la face inférieure d'une feuille de verre sur le convoyeur au-delà du milieu de la distance séparant les axes de symétrie de deux rouleaux successifs dudit convoyeur.

On considère comme oblique toute inclinaison d'au moins cinq degrés par rapport à la verticale.

L'invention concerne également un dispositif de chauffage de feuilles de verre dans un four comprenant un convoyeur à rouleaux sensiblement horizontaux, des moyens de chauffage par radiation disposés au-dessus et en dessous du convoyeur, des injecteurs de gaz chaud également disposés en dessous et au-dessus du convoyeur et des moyens d'alimentation en gaz des injecteurs, dans lequel ceux des injecteurs disposés sous le convoyeur sont orientés de sorte à ce que leur axe de symétrie soit oblique relativement au sens de déplacement d'une feuille de verre sur le convoyeur
et dans lequel les injecteurs (8) sont orientés de sorte à ce que leur axe de symétrie coupe le plan de la face inférieure d'une feuille de verre (3) sur le convoyeur (1) au-delà du milieu de la distance séparant les axes de symétrie de deux rouleaux (2) successifs dudit convoyeur (1).

L'injection de gaz chaud sous forme de jets obliques dirigés vers la face inférieure d'une feuille de verre permet au taux de convection forcée au niveau de cette face d'augmenter sensiblement lorsque la feuille s'infléchit de manière convexe au-dessus du convoyeur quand l'apport de chaleur à la face supérieur de ladite feuille devient supérieur à celui appliqué à la face inférieure de cette feuille.

En effet, tant que la feuille est plane sur les rouleaux du convoyeur, chaque jet de gaz chaud n'affecte sensiblement que la portion de surface du verre située entre deux rouleaux. En revanche, dès que la feuille s'infléchit au-dessus du convoyeur, chaque jet de gaz chaud, du fait de son obliquité relativement à la feuille, affecte une bien plus grande portion de surface de cette dernière, augmentant en proportion le taux de convection forcé de chaleur au niveau de la face inférieure de la feuille de verre.

Ceci n'est pas le cas lorsque des jets de gaz sont dirigés perpendiculairement à ladite face car alors, quand la feuille s'infléchit au dessus du convoyeur, la portion de sa surface affectée par chaque jet de gaz n'est pas sensiblement modifiée.

L'augmentation du taux de convection forcée au niveau de la face inférieure d'une feuille de verre permise par l'invention conduit à pratiquement éliminer la flexion de ladite feuille et permet dès lors de stabiliser la planéité de cette dernière sur le convoyeur. En effet, l'augmentation considérée se reproduira à chaque fois que la feuille de verre s'infléchira au-dessus du convoyeur. Normalement, la pression du gaz chaud dans les moyens d'alimentation des injecteurs inférieurs au convoyeur demeure toujours sensiblement inférieure à la pression du gaz chaud dans les moyens d'alimentation des injecteurs supérieurs au convoyeur de sorte que la chaleur apportée par le gaz injecté sous le convoyeur au niveau de la face inférieure d'une feuille de verre ne puisse provoquer un déséquilibre au profit de la face inférieure, lequel pourrait entraîner un fléchissement concave de cette feuille au-dessus du convoyeur.

Dès lors, l'invention concerne encore l'utilisation du dispositif de chauffage décrit ci-dessus en vue de stabiliser la planéité de feuilles de verre dans un four de chauffage desdites feuilles, notamment de feuilles de verre portant un revêtement de couches de type basse émissivité.

Le gaz chaud injecté dans le four peut avoir été réchauffé à partir de la température ambiante à son entrée dans les moyens d'alimentation des injecteurs, pendant son passage dans ces moyens jusqu'aux injecteurs, lesquels moyens sont eux-mêmes chauffés par les résistances électriques disposées dans le four. Alternativement, le gaz peut être chauffé à l'extérieur du four avant d'être introduit dans les moyens d'alimentation des injecteurs. En tout état de cause, on préfère que le gaz injecté dans le four soit porté à une température supérieure à 400 °C.

De préférence, l'injection de gaz chaud sous le convoyeur n'est pas enclenchée dès l'entrée de la feuille dans le four. Par conséquent, on préfère que les rampes d'alimentation en gaz chaud des injecteurs disposés sous le convoyeur soient commandées séparément, par exemple au moyen de vannes d'ouverture et de fermeture de ces dernières. De la sorte, la face inférieure de ladite feuille est d'abord seulement chauffée par la chaleur radiée par les résistances disposées sous le convoyeur ainsi que par celle conduite par les rouleaux alors que la face supérieure de la feuille est chauffée également par la chaleur radiée par les résistances disposées au-dessus du convoyeur ainsi que par convection forcée au moyen de jets de gaz chaud dirigés vers ladite face. Ceci évite que la feuille de verre s'infléchisse de manière concave au-dessus du convoyeur. Lorsque le bilan thermique de la chaleur apportée à chaque face de la feuille devient défavorable à sa face inférieure et que par conséquent la feuille s'infléchit de manière convexe au-dessus du convoyeur, l'injection de gaz chaud sous forme de jets obliques dirigés vers la face inférieure de la feuille est enclenchée et peut être maintenue pendant tout ou partie du trajet de la feuille dans le four.

Dès lors, l'invention fournit un système d'autorégulation de la planéité de feuilles de verre convoyées dans un four de chauffage desdites feuilles. Il n'est par conséquent pas nécessaire de réguler l'injection de gaz chaud sous forme de jets obliques dirigés vers la face inférieure d'une feuille de verre selon l'invention une fois qu'elle a été enclenchée.

Il est également préférable que le dispositif de commande de chaque rampe d'alimentation en gaz chaud des injecteurs disposés sous le convoyeur permette une modulation de la pression dudit gaz en fonction de l'épaisseur des feuilles de verre convoyées dans le four ainsi que de l'émissivité du revêtement qu'elles portent. De la sorte, la stabilisation de la planéité des feuilles pourra être optimisée en fonction de leurs caractéristiques.

L'enclenchement de l'injection du gaz chaud sous le convoyeur peut selon une forme préférée de l'invention être commandé par un système de détection de l'inflexion de la feuille de verre au-dessus du convoyeur, ou par un système de minuterie.

Selon l'invention, l'axe de symétrie des jets de gaz dirigés vers la face inférieure d'une feuille de verre coupe le plan de la face inférieure d'une feuille de verre sur le convoyeur au-delà du milieu de la distance séparant les axes de symétrie de deux rouleaux successifs. De la sorte, à distance égale entre les injecteurs et les rouleaux, l'angle formé par les jets de gaz obliques et la face inférieure d'une feuille de verre est plus aigu, ce qui favorise un bon écoulement du gaz à la surface de la feuille lorsqu'elle s'infléchit au dessus du convoyeur.

De préférence, les moyens d'alimentation en gaz comprimé du dispositif selon l'invention comprennent des conduites disposées sensiblement parallèlement aux axes des rouleaux du convoyeur, sur lesquelles sont montés les injecteurs. Une telle configuration permet de commander simultanément tous les injecteurs disposés sur une conduite au moyen d'une seule vanne d'ouverture et de fermeture de cette conduite.

On préfère que chacun des injecteurs disposés sous le convoyeur soit situé sous un rouleau dudit convoyeur. De la sorte, en cas de bris d'une feuille de verre sur le convoyeur, ces moyens ne gênent pas la chute des fragments de verre entre les rouleaux et ne peuvent être endommagés ou les injecteurs qu'ils portent obstrués par ces fragments.

Il est préférable d'autre part que les injecteurs disposés sous un rouleau du convoyeur soient orientés de sorte à ce que leur axe de symétrie coupe le plan de la face inférieure d'une feuille de verre sur le convoyeur au-delà du milieu de la distance séparant les axes de symétrie de deux rouleaux successifs dudit convoyeur.

Plus préférablement encore, lesdits moyens d'alimentation sont disposés sous un rouleau sur au moins deux. Un tel espacement est favorable à une bonne circulation du gaz sous la feuille de verre lorsque celle-ci s'infléchit au-dessus du convoyeur.

Selon une autre forme préférée de l'invention, la pression du gaz mesurée à l'extrémité d'une rampe d'alimentation en gaz chaud des injecteurs disposés sous une feuille de verre est comprise entre 0.15 et 10 bars, de préférence entre 0.2 et 6 bars, plus préférablement entre 0.25 et 3.5 bars. Il est également préférable que ces injecteurs soient alignés parallèlement aux axes des rouleaux et séparés d'une distance comprise entre 40 et 200 mm, de préférence entre 130 et 170 mm. Il est encore préférable que lesdits injecteurs soient séparés de ladite feuille d'une distance comprise entre 25 et 300 mm, de préférence entre 80 et 160 mm, plus préférablement entre 90 et 140 mm.

De telles pressions et distances sont optimales pour favoriser un bon transfert de chaleur entre le gaz et la feuille de verre tout en évitant que des turbulences trop importantes ne se forment dans les jets de gaz au niveau des faces des feuilles de verre qui pourraient perturber l'homogénéité de chauffage du verre.

Pour des raisons semblables, on préfère que la section de chaque injecteur disposé sous une feuille de verre soit inférieure à 1.5 mm².

La forme de la section de sortie desdits injecteurs est adaptée à la géométrie de chaque four en vue d'optimiser l'échange thermique avec le verre lorsque la feuille s'infléchit au-dessus du convoyeur. Elle sera généralement circulaire ou ovale mais d'autres formes sont également possibles selon l'invention.

Selon une autre forme de l'invention, les injecteurs sont contrôlés pour ne libérer le gaz chaud qu'aux positions où une feuille de verre est présente, ce qui correspond généralement à environ 2/3 de la longueur du four. Cette forme de l'invention peut présenter l'avantage de diminuer le coût énergétique de l'opération et peut également permettre un contrôle plus aisé de la température dans les différentes parties du four, entre autres celles où une feuille de verre est présente et celles où il n'y en a pas.

Dans une autre variante de l'invention, les rampes d'alimentation en gaz des injecteurs délivrent une pression et/ou un débit de gaz chaud qui n'est pas égal sur toute la largeur du four, les injecteurs centraux présentant une pression et/ou un débit plus élevé que ceux des extrémités. Cette particularité peut faciliter le chauffage homogène des feuilles de verre, les bords de celles-ci nécessitant parfois moins de chaleur que leur partie centrale pour atteindre un état équivalent. En effet, les bords des feuilles de verre présentent 3 faces à l'air chaud ambiant, et peuvent ainsi atteindre l'état désiré plus facilement que la partie centrale qui ne présente que deux faces.

L'invention sera maintenant décrite de manière plus détaillée au moyen des figures jointes, dans lesquelles,
La figure 1 est une représentation schématique d'une section longitudinale d'un dispositif de chauffage de feuilles de verre selon l'art antérieur.
La figure 2 est une représentation schématique d'une section longitudinale d'un dispositif de chauffage de feuilles de verre selon l'invention, considéré au moment de l'enclenchement du système de convection forcée disposé sous le convoyeur.

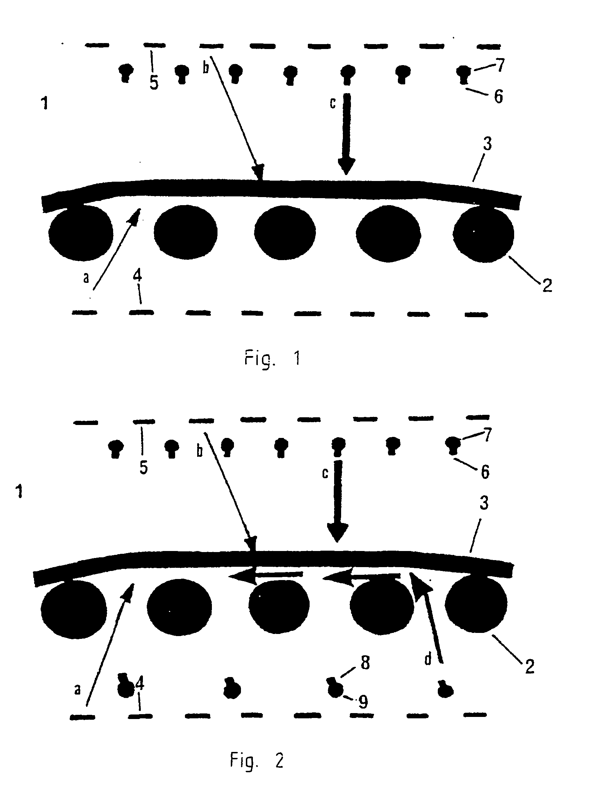

Selon la figure 1, un convoyeur (1) comprenant des rouleaux (2) est disposé dans l'enceinte (non représentée) d'un four de chauffage de feuilles de verre. Le convoyeur (1) porte une feuille de verre (3) dont la face inférieure est soumise à un apport de chaleur par radiation représenté par la flèche (a) au moyen de résistances électriques (4) disposées sous le convoyeur (1) et par conduction au moyen des rouleaux (2) qui ont accumulés de la chaleur radiée par les résistances (4) et le restituent à la feuille (3). La face supérieure de cette dernière est soumise à un apport de chaleur par radiation représenté par la flèche (b) au moyen de résistances électriques (5) disposées au dessus du convoyeur (1) et par convection forcée représenté par la flèche (c) au moyen de gaz chaud injecté dans l'enceinte en direction de la face supérieure de la feuille (3) par des injecteurs (6) reliés à une rampe d'alimentation en gaz chaud (7) disposée au dessus du convoyeur (2) et elle-même connectée à un compresseur (non représenté). Sous l'effet d'un apport de chaleur au niveau de sa face supérieure plus élevé que celui auquel est soumise sa face inférieure, la feuille (3) s'infléchit de manière convexe au-dessus du convoyeur (1) et cette flexion se maintient durant la durée restante du cycle de chauffage du verre.

La figure 2 reprend les éléments de la figure 1 référencés de la même manière. Selon l'invention, lorsque la feuille (3) s'infléchit de manière convexe au dessus du convoyeur (2), la face inférieure de ladite feuille est soumise à un apport de chaleur par convection forcée représenté par les flèches (d) au moyen de gaz chaud injecté dans l'enceinte de manière oblique en direction de la face inférieure de la feuille (3) par des injecteurs (8) reliés à une rampe d'alimentation en gaz chaud (9) disposée sous le convoyeur et elle-même connectée à un compresseur (non représenté). Les injecteurs (8) sont alimentés en gaz chaud compressé lorsque la feuille (3) s'infléchit de manière convexe au-dessus du convoyeur et l'apport de chaleur par convection forcée au niveau de la face inférieure de la feuille (3) permet à cette dernière, par équilibrage de l'apport de chaleur au niveau des faces inférieure et supérieure de ladite feuille, de retrouver sa planéité.

L'invention peut être illustrée par l'exemple d'application suivant :
Dans un four de chauffage de feuilles de verre comprenant un convoyeur à rouleaux, des feuilles de verres sont convoyées en vue de leur faire subir un traitement de chauffage préalable à une étape ultérieure de trempe ou de bombage. Ledit four est muni de résistances électriques disposées au-dessus et en dessous du convoyeur de sorte à établir dans le four une température au dessus du convoyeur de 700°C et en dessous du convoyeur de 690°C. Le four est également équipé de rampes d'alimentation en air chaud d'injecteurs de ce gaz vers la feuille de verre convoyée, disposées parallèlement les unes aux autres et à la feuille de verre et orthogonalement au sens de déplacement de ladite feuille dans le four. Ces rampes sont au nombre de 9 au-dessus du convoyeur et de 5 en dessous. Chaque rampe supérieure est séparée de la rampe voisine d'une distance de 550 mm et chaque rampe inférieure est disposée sous un rouleau sur 8. Chacune des rampes est munie de 45 injecteurs équidistants, d'une section de sortie de 0.7 mm et cette section est séparée de la feuille de verre d'une distance de 150 mm. Les injecteurs supérieurs sont disposés de manière telle que leur axe de symétrie soit orthogonal au plan de la face supérieure d'une feuille de verre et les gicleurs inférieurs de manière telle à ce que leur axe de symétrie soit oblique relativement au sens de déplacement des feuilles de verre dans le four et qu'il coupe le plan de la face inférieure de ces feuilles aux trois quarts de la distance séparant les axes de deux rouleaux successifs. Les rampes d'alimentation sont constituées d'un tube d'un diamètre intérieur de 50 mm et sont elles-mêmes alimentées chacune en air par un serpentin de 12 de longueur et de 15 mm de diamètre enroulé autour de la rampe. La T° de l'air à l'intérieur des rampes est ainsi maintenue à 670°C en cas d'injection continue d'air dans le four, la pression d'alimentation en air des rampes étant réglable.
Une feuille de verre de 6 mm d'épaisseur portant un revêtement de couches lui conférant une émissivité de 0.03 est convoyée dans le four, les rampes d'alimentation supérieures des injecteurs étant soumises à une pression d'air de 6 bars et les rampes inférieures n'étant pas alimentées en air. Après 60 secondes de présence dans le four, la feuille de verre s'incurve de manière convexe au-dessus du convoyeur et demeure ainsi déformée jusqu'à la fin du cycle de chauffage, soit 310 secondes après l'entrée de la feuille dans le four. Il résulte de cette flexion de la feuille des irrégularités de surface dues aux contacts appuyés des parties marginales de la feuille sur les rouleaux, une détérioration des propriétés optiques du revêtement porté par cette feuille due à l'inhomogénéité de la répartition de la chaleur à la surface dudit revêtement et une fragmentation irrégulière de cette feuille lors d'un essai de casse après trempe.
Une autre feuille de verre de caractéristiques identiques à la précédente est introduite dans le four et les rampes inférieures d'alimentation en gaz chaud des injecteurs sont alimentées en air sous une pression de 1 bar. Aucune déformation significative de la feuille de verre n'est alors plus observée durant le reste du cycle de chauffage de ladite feuille. Les défauts apparus en l'absence d'alimentation des rampes inférieures ne sont pas constatés.

L'invention permet également de réduire le temps de cycle de chauffe de feuilles de verre ne portant aucun revêtement à basse émissivité sans que cette réduction se fasse au prix des défauts susmentionnés, en autorisant que l'apport de chaleur par convection forcée à la face supérieure d'une feuille de verre soit augmenté par rapport à celui permis dans un four ne comprenant pas de dispositif de convection forcée selon l'invention, cette augmentation étant compensée grâce audit dispositif. Ainsi, la durée d'un cycle de chauffe de feuilles de verre clair de 6 mm d'épaisseur peut être ramenée de 260 à 210 secondes soit un gain de l'ordre de 20%.

## Revendications

1. Procédé de chauffage de feuilles de verre (3) dans un four dans lequel procédé des feuilles de verre (3) sont transportées par un convoyeur (1) à rouleaux (2) sensiblement horizontaux au travers dudit four où les faces d'une feuille de verre (3) sont chauffées par des moyens de chauffage par radiation (4,5) disposés au-dessus et en dessous de ladite feuille (3) et dans lequel lesdites faces sont soumises à un effet de convection forcée de chaleur par injection de gaz chaud (6,8) dans le four au-dessus et en dessous d'une desdites feuilles de verre (3) **caractérisé en ce que** le gaz est injecté en dessous d'une desdites feuilles de verre (3) sous forme de jets dont l'axe de symétrie est oblique, d'une inclinaison d'au moins 5° par rapport à la verticale, relativement au sens de déplacement d'une feuille de verre (3) sur le convoyeur (1) et dirigés vers la face inférieure de ladite feuille (3) et dans lequel l'axe de symétrie desdits jets coupe le plan de la face inférieure d'une feuille de verre (3) sur le convoyeur (1) au-delà du milieu de la distance séparant les axes de symétrie de deux rouleaux (2) successifs dudit convoyeur (1).

2. Dispositif de chauffage de feuilles de verre (3) dans un four comprenant un convoyeur (1) à rouleaux (2) sensiblement horizontaux, des moyens de chauffage par radiation (4,5) disposés au dessus et en dessous du convoyeur (1), des injecteurs de gaz chaud (6,8) disposés en dessous et au dessus du convoyeur (1) et des moyens d'alimentation en gaz des injecteurs (6,7,8,9) **caractérisé en ce que** ceux des injecteurs (8,9) disposés sous le convoyeur (1) sont orientés de sorte à ce que leur axe de symétrie soit oblique, d'une inclinaison d'au moins 5° par rapport à la verticale, relativement au sens de déplacement d'une feuille de verre (3) sur le convoyeur (1) et dans lequel les injecteurs (8) sont orientés de sorte à ce que leur axe de symétrie coupe le plan de la face inférieure d'une feuille de verre (3) sur le convoyeur (1) au-delà du milieu de la distance séparant les axes de symétrie de deux rouleaux (2) successifs dudit convoyeur (1).

3. Dispositif selon la revendication 2 dans lequel les moyens d'alimentation en gaz chaud (6,7,8,9) comprennent des conduites (7,9) disposées sensiblement parallèlement aux axes des rouleaux (2) du convoyeur (1), sur lesquelles sont montés les injecteurs (6,8).

4. Dispositif selon l'une des revendications 2 ou 3 dans lequel chacun des injecteurs (8) disposés sous le convoyeur (1) est situé sous un rouleau (2) du convoyeur (1).

5. Dispositif selon la revendication 4 dans lequel lesdits injecteurs (8) sont disposés sous un rouleau (2) sur au moins deux.

6. Dispositif selon l'une des revendications 2 à 5 dans lequel la pression du gaz émis par les injecteurs (8) disposés sous une feuille de verre (3) est comprise entre 0.15 et 10 bars, de préférence entre 0.2 et 6 bars, plus préférablement entre 0.25 et 3.5 bars.

7. Dispositif selon l'une des revendications 2 à 6 dans lequel les injecteurs (8) disposés sous une feuille de verre (3) sont alignés parallèlement aux axes des rouleaux (2) et séparés d'une distance comprise entre 100 et 200 mm, de préférence entre 130 et 170 mm.

8. Dispositif selon l'une des revendications 2 à 7 dans lequel les injecteurs (8) disposés sous une feuille de verre (3) sont séparés de ladite feuille (3) d'une distance comprise entre 25 et 300 mm, de préférence entre 80 et 160 mm, plus préférablement entre 90 et 140 mm.

9. Dispositif selon l'une quelconque des revendications 2 à 8 dans lequel les injecteurs (8) disposés sous une feuille de verre (3) sont orientés de sorte à produire des jets de gaz dirigés au-delà du milieu de l'espace séparant deux rouleaux (2) du convoyeur (1).

10. Dispositif selon l'une quelconque des revendications 2 à 9 dans lequel les injecteurs (6) disposés au-dessus d'une feuille de verre (3) sont orientés de sorte à émettre des jets de gaz sensiblement perpendiculaires à ladite feuille (3).

11. Dispositif selon l'une quelconque des revendications 2 à 10 dans lequel les injecteurs (6,8) sont aptes à être contrôlés pour ne libérer le gaz chaud qu'aux positions où une feuille de verre (3) est présente.

12. Dispositif selon l'une quelconque des revendications 2 à 11 dans lequel les moyens d'alimentation en gaz des injecteurs (7,9) et/ou les injecteurs (6,8) sont adaptés pour délivrer une pression et/ou un débit de gaz chaud qui n'est pas égal sur toute la largeur du four, les injecteurs centraux présentant une pression et/ou un débit plus élevé que ceux des extrémités.

13. Utilisation du dispositif selon l'une des revendications 2 à 12 en vue de stabiliser la planéité de feuilles de verre (3) dans un four de chauffage desdites feuilles (3).

14. Utilisation du dispositif selon la revendication 13 en vue de stabiliser la planéité de feuilles de verre (3) portant un revêtement de type basse émissivité.

## Claims

1. Method for heating glass sheets (3) in an oven, wherein the glass sheets (3) are transported by a conveyor (1) with essentially horizontal rollers (2) through said oven, where the faces of a glass sheet (3) are heated by radiation heating means (4,5) disposed above and beneath said sheet (3), and in which said faces are subjected to an effect of forced convection of heat by the injection of hot gas (6,8) into the oven above and beneath one of said glass sheets (3), **characterised in that** the gas is injected beneath one of said glass sheets (3) in the form of jets, the axis of symmetry of which is oblique, with an inclination of at least five degrees relative to the vertical, relative to the direction of travel of a glass sheet (3) on the conveyor (1) and directed towards the lower face of said sheet (3) and in which the axis of symmetry of said jets intersects the plane of the lower face of a glass sheet (3) on the conveyor (1) beyond the centre of the space separating the axes of symmetry of two successive rollers (2) of said conveyor (1).

2. Device for heating glass sheets (3) in an oven comprising a conveyor (1) with essentially horizontal rollers (2), radiation heating means (4,5) disposed above and beneath the conveyor (1), hot gas injectors disposed beneath and above the conveyor and means (6,7,8,9) for feeding gas to the injectors, **characterised in that** those injectors (8,9) disposed under the conveyor (1) are oriented such that their axis of symmetry is oblique, with an inclination of at least five degrees relative to the vertical, in relation to the direction of travel of a glass sheet (3) on the conveyor (1) and in which he injectors (8) are oriented such that their axis of symmetry intersects the plane of the lower face of a glass sheet (3) on the conveyor (1) beyond the centre of the space separating the axes of symmetry of two successive rollers (2) of said conveyor (1)..

3. Device according to Claim 2, wherein the means (6,7,8,9) of feeding hot gas comprise ducts (7,9)arranged essentially parallel to the axes of the rollers (2) of the conveyor (1), on which the injectors (6,8) are mounted.

4. Device according to one of Claims 2 or 3, wherein each of the injectors (8) disposed under the conveyor (1) is located under a roller (2) of the conveyor (1).

5. Device according to Claim 4, wherein said injectors (8) are disposed under one roller (2) of at least two.

6. Device according to one of Claims 2 to 5, wherein the pressure of the gas emitted through the injectors (8) disposed under a glass sheet (3) is in the range of between 0.15 and 10 bar, preferably between 0.2 and 6 bar, and most preferred between 0.25 and 3.5 bar.

7. Device according to one of Claims 2 to 6, wherein the injectors (8) disposed under a glass sheet (3) are aligned parallel to the axes of the rollers (2) and separated by a distance of between 100 and 200 mm, preferably between 130 and 170 mm.

8. Device according to one of Claims 2 to 7, wherein the injectors (8) disposed under a glass sheet (3) are separated from said sheet (3) at a distance of between 25 and 300 mm, preferably between 80 and 160 mm, and most preferred between 90 and 140 mm.

9. Device according to any one of Claims 2 to 8, wherein the injectors (8) disposed under a glass sheet (3) are oriented so as to produce jets of gas directed beyond the centre of the space separating two rollers (2) of the conveyor (1).

10. Device according to any one of Claims 2 to 9, wherein the injectors (6) disposed above a glass sheet (3) are oriented so as to emit jets of gas which are essentially perpendicular to said sheet (3).

11. Device according to any one of Claims 2 to 10, wherein the injectors (6,8) are capable of being controlled so that they only release hot gas at the positions where a glass sheet (3) is present.

12. Device according to any one of Claims 2 to 11, wherein the means for feeding gas to the injectors (7,9) and/or the injectors (6,8) are adapted to supply a pressure and/or a flow rate of hot gas which is not equal over the entire width of the oven, the central injectors having a pressure and/or a flow rate higher than those at the ends.

13. Use of the device according to one of Claims 2 to 12 with a view to stabilising the surface flatness of glass sheets (3) in an oven for heating said sheets (3).

14. Use of the device according to Claim 13 with a view to stabilising the flatness of the surface of glass sheets (3) with a low-emissive coating.

## Patentansprüche

1. Verfahren zum Erhitzen von Glasscheiben (3) in einem Ofen, worin in dem Verfahren Glasscheiben (3) mittels einer Fördereinrichtung (1) mit im wesentlichen horizontalen Walzen (2) durch den Ofen transportiert werden, in dem die Seiten einer Glasscheibe (3) durch Mittel (4,5) zum Erhitzen durch Strahlung erhitzt werden, die ober- und unterhalb der Scheibe (3) angeordnet sind und worin die Seiten einem durch Hitze erzwungenen Konvektionseffekt unterzogen werden, der durch Einblasen von heißem Gas (6,8) in den Ofen ober- und unterhalb einer der Glasscheiben (3) erzeugt wird, **dadurch gekennzeichnet, dass** das Gas unterhalb einer der Glasscheiben (3) in Form von Strahlen eingeblasen wird, deren Symmetrieachse schräg ist und eine Neigung von wenigstens 5° bezogen auf die Vertikale, relativ zur Bewegungsrichtung einer Glasscheibe (3) auf der Fördereinrichtung (1) aufweist und auf die Unterseite der Scheibe (3) gerichtet sind, und worin die Symmetrieachse der Strahlen die Ebene der Unterseite einer Glasscheibe (3) auf der Fördereinrichtung (1) jenseits der Mitte derjenigen Wegstrecke schneidet, die die Symmetrieachsen von zwei aufeinander folgenden Walzen (2) der Fördereinrichtung (1) voneinander trennt,

2. Vorrichtung zum Erhitzen von Glasscheiben (3) in einem Ofen, umfassend eine Fördereinrichtung (1) mit im wesentlichen horizontalen Walzen (2), Mittel (4,5) zum Erhitzen durch Strahlung, die ober- und unterhalb der Fördereinrichtung (1) angeordnet sind, Einspritzdüsen (6,8) für heißes Gas, die ober- und unterhalb der Fördereinrichtung (1) angeordnet sind und Mittel (6,7,8,9) zur Versorgung der Einspritzdüsen mit Gas, **dadurch gekennzeichnet, dass** diejenigen Einspritzdüsen (8,9), die unterhalb der Fördereinrichtung (1) angeordnet sind, derart ausgerichtet sind, dass ihre Symmetrieachse schräg ist und einer Neigung von wenigstens 5° bezogen auf die Vertikale, relativ zur Bewegungsrichtung einer Glasscheibe (3) auf der Fördereinrichtung (1) aufweist, und bei der die Einspritzdüsen (8) so ausgerichtet sind, dass ihre Symmetrieachse die Ebene der Unterseite einer Glasscheibe (3) auf der Fördereinrichtung (1) jenseits der Mitte derjenigen Wegstrecke schneidet, die die Symmetrieachsen von zwei aufeinander folgenden Walzen (2) der Fördereinrichtung (1) voneinandertrennt.

3. Vorrichtung nach Anspruch 2, bei der die Mittel (6,7,8,9) zur Versorgung der Einspritzdüsen mit heißem Gas Leitungen (7,9) umfassen , die im wesentlichen parallel zu den Achsen der Walzen (2) der Fördereinrichtung (1) angeordnet sind, auf denen die Einspritzdüsen (6,8) montiert sind.

4. Vorrichtung nach einem der Ansprüche 2 oder 3, bei der jede der Einspritzdüsen (8), die unter der Fördereinrichtung (1) angeordnet sind, sich unter einer Walze (2) der Fördereinrichtung (1) befindet.

5. Vorrichtung nach Anspruch 4, bei der die Einspritzdüsen (8) unter einer von mindestens zwei Walzen (2) angeordnet sind.

6. Vorrichtung nach einem der Ansprüche 2 bis 5, bei der der Druck des durch die unter einer Glasscheibe (3) angeordneten Einspritzdüsen (8) ausströmenden Gases zwischen 0,15 und 10 bar, vorzugsweise zwischen 0,2 und 6 bar, noch bevorzugter zwischen 0,25 und 3,5 bar liegt.

7. Vorrichtung nach einem der Ansprüche 2 bis 6, bei der die Einspritzdüsen (8), die unter einer Glasscheibe (3) angeordnet sind, parallel zu den Achsen der Walzen (2) ausgerichtet sind und voneinander durch einen Abstand von zwischen 100 und 200 mm, vorzugsweise zwischen 130 und 170 mm getrennt sind.

8. Vorrichtung nach einem der Ansprüche 2 bis 7, bei der die Einspritzdüsen (8), die unter einer Glasscheibe (3) angeordnet sind, von der Scheibe (3) durch einen Abstand von zwischen 25 und 300 mm, vorzugsweise zwischen 80 und 160 mm, noch bevorzugter zwischen 90 und 140 mm getrennt sind.

9. Vorrichtung nach einem der Ansprüche 2 bis 8, bei der die Einspritzdüsen (8), die unter einer Glasscheibe (3) angeordnet sind, so ausgerichtet sind, dass sie Gasstrahlen erzeugen, die auf jenseits der Mitte des Raumes gerichtet sind, der zwei Walzen (2) der Fördereinrichtung (1) trennt.

10. Vorrichtung nach einem der Ansprüche 2 bis 9, bei der die Einspritzdüsen (6), die über einer Glasscheibe (3) angeordnet sind, so ausgerichtet sind, dass sie Gasstrahlen ausströmen lassen, die im wesentlichen senkrecht zur Scheibe (3) sind.

11. Vorrichtung nach einem der Ansprüche 2 bis 10, bei der die Einspritzdüsen (6,8) so gesteuert werden können, dass das heiße Gas nur an den Stellen freigesetzt wird, wo eine Glasscheibe (3) vorhanden ist.

12. Vorrichtung nach einem der Ansprüche 2 bis 11, bei der die Mittel (7,9) zur Versorgung der Einspritzdüsen mit Gas und/oder die Einspritzdüsen (6,8) so ausgelegt sind, dass sie einen Druck und/oder einen Fluss heißen Gases, der über die gesamte Breite des Ofens nicht gleich ist,liefern können und bei der die zentralen Einspritzdüsen einen Druck und/oder einen Fluss aufweisen, der höher ist als bei denjenigen an den Rändern.

13. Verwendung der Vorrichtung nach einem der Ansprüche 2 bis 12 zur Stabilisierung der Ebenheit der Glasscheiben (3) in einem Ofen zum Erhitzen dieser Scheiben (3).

14. Verwendung der Vorrichtung nach Anspruch 13 zur Stabilisierung der Ebenheit von Glasscheiben (3), die eine Beschichtung mit einem niedrigen Emissionsvermögen haben.
